# FASCICULE DE BREVET EUROPEEN

(11) **EP 0 631 405 B1**
(45) Date de publication et mention de la délivrance du brevet: **13.11.2002**
(21) Numéro de dépôt: 94401417.4
(22) Date de dépôt: 23.06.1994
(51) Int. Cl.: H04J 14/02, H04J 3/08, H04J 14/08

(54) **Boucle de transmission à multiplexage dans le temps en longueur d'onde**
WDM Zeitmultiplex-Schleifenübertragungssystem
WDM TDM ring network

(30) Priorité: 25.06.1993 FR 9307764
(43) Date de publication de la demande: 28.12.1994
(73) Titulaire: FRANCE TELECOM, 75015 Paris (FR)
(72) Inventeur: Hamel, André, F-22300 Lannion (FR); Chawki, Mouhamad, F-22300 Lannion (FR); Tholey, Valérie, F-22300 Lannion (FR)
(74) Mandataire: Poulin, Gérard

(56) Documents cités:
- EP-A- 0 295 857
- EP-A- 0 520 494
- SUPERCOM '92;PROCEEDINGS INTERNATIONAL CONFERENCE ON COMMUNICATIONS, vol.3, 14 Juin 1992, CHICAGO (US) pages 1173 - 1179 STUART S. WAGNER ET AL. 'Multiwavelength ring networks for switch consolidation and interconnection.'
- ELECTRONICS LETTERS., vol.28, no.11, 21 Mai 1992, STEVENAGE GB pages 1066 - 1067, XP318934 D.J. PRAT ET AL. 'Four channel multiple wavelength laser transmitter module for 1550 nm WDM system.'
- PROCEEDINGS IEEE GLOBAL TELECOMMUNICATIONS CONFERENCE., vol.2, 2 Décembre 1991, PHOENIX (US) pages 1506 - 1514, XP332900 N. TAT ET AL. 'ATM technology development in RACE.'

## Description

### Domaine technique

La présente invention a pour objet une boucle de transmission à multiplexage dans le temps et en longueur d'onde. Elle trouve une application en télécommunications optiques.

### Etat de la technique antérieure

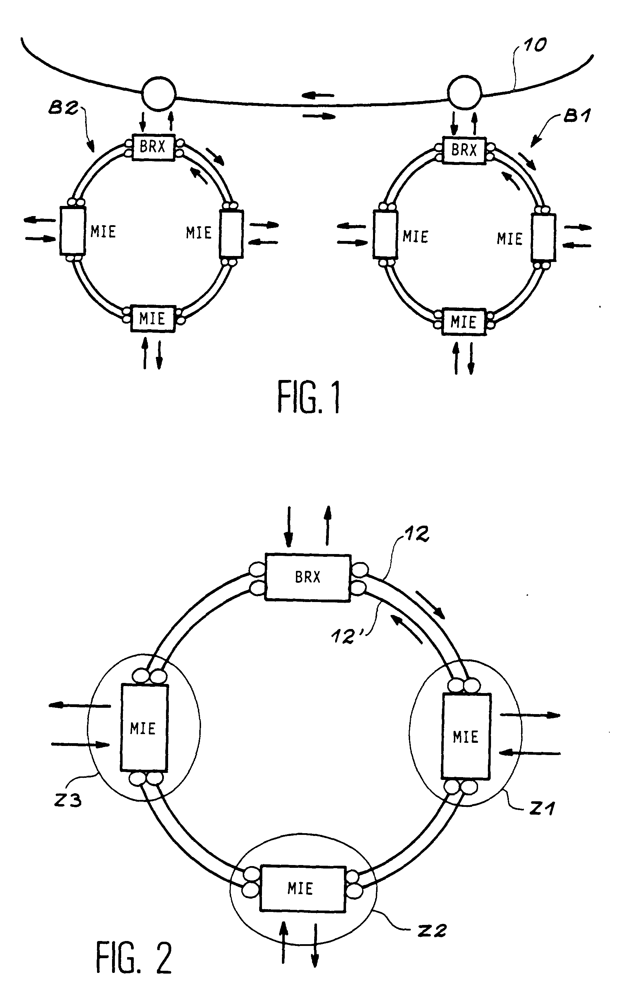

Certains réseaux de transmission sont organisés en boucles, comme représenté sur la figure 1 annexée. On y voit un réseau général 10 et plusieurs boucles B1, B2, etc... Chaque boucle est représentée plus en détail sur la figure 2. Elle comprend un circuit BRX appelé tête de réseau, qui est un brasseur-répartiteur, et plusieurs circuits MIE, qui sont des multiplexeurs à insertion et extraction. Chacun de ces multiplexeurs est disposé dans une zone locale à desservir soit Z1, Z2, Z3. Une double liaison 12, 12' véhicule les données entre la tête de réseau et les multiplexeurs, dans deux sens différents.

De tels réseaux en boucles sont bien adaptés à la nouvelle technique de transmission dite "hiérarchie numérique synchrone" ou HNS en abrégé (SDH en anglais, pour "Synchronous Digital Hierarchy").

Des équipements réalisés en technologie électronique sont actuellement à l'état de prototypes industriels. Une famille d'équipement compatibles avec la HNS est décrite par exemple dans l'article de P. ANACHE et al., intitulé "Famille d'équipements de transmission synchrone", publié dans "Commutation et Transmission", n° 3, 1991, pp 39-51.

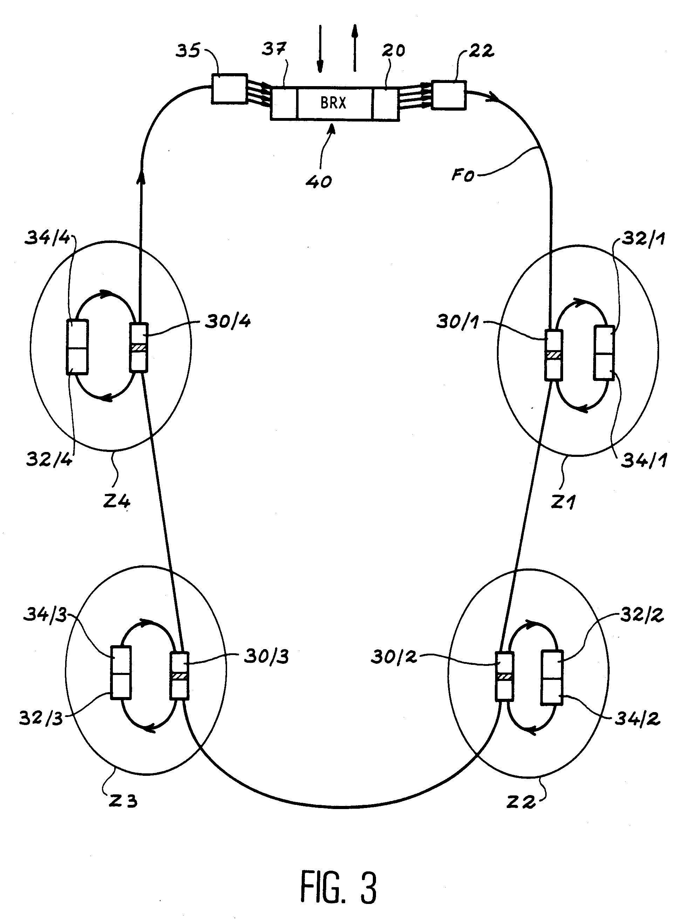

D'autres équipements en technologie optique sont en cours d'étude et ont fait l'objet de quelques publications. Une boucle optique de principe est illustrée sur la figure 3, dans le cas de quatre zones locales. La tête de réseau comprend encore un circuit BRX couplé au réseau général. Elle traite des données électriques. Associé au BRX se trouve un émetteur 20 constitué par plusieurs sources lumineuses (quatre dans l'exemple illustré) délivrant quatre faisceaux optiques à des longueurs d'onde différentes. Un multiplexeur 22 multiplexe ces faisceaux et les introduit dans une fibre optique monomode F0. Chaque zone Z1, Z2, Z3, Z4 comprend un multiplexeur d'insertion et d'extraction constitué d'un composant optique 30/1, 30/2, 30/3, 30/4 du genre coupleur, ce composant étant apte à extraire une ou plusieurs longueurs d'onde pour les adresser à un récepteur 32/1, 32/2, 32/3, 32/4. Ces moyens remplissent la fonction d'extraction des données.

Quant à la fonction d'insertion, elle est remplie par des émetteurs 34/1, 34/2, 34/3, 34/4 disposés dans les zones locales et le composant 30/1, 30/2, 30/3, 30/4 et permet d'insérer dans le faisceau circulant sur la fibre optique F0, des données provenant de chaque zone locale, à la place des données extraites.

La boucle se referme sur la tête de réseau 40 par un démultiplexeur 35, qui sépare les différents faisceaux de longueurs d'onde différentes et un récepteur 37, qui délivre les données sous forme électrique et les adresse au brasseur BRX.

Une deuxième fibre optique, de secours, non représentée sur la figure 3, peut être ajoutée pour constituer, avec les composants optiques appropriés (coupleur, récepteur, émetteur) une boucle de secours, qui pourra fonctionner en sens inverse de la boucle principale.

Dans l'article de A.F. ELREFAIE et al. intitulé "Fibre Amplifiers in Closed-Ring WDM Networds", publié dans Electronics Letters, vol. 28, n° 25, 1992, pp 2340-2341, il est décrit une boucle de ce type dans laquelle les moyens d'extraction et d'insertion sont des réseaux de diffraction capables d'extraire cinq longueurs d'onde parmi 30. Les longueurs d'onde s'étalent entre 1538 et 1566 nm, tous les 2 nanomètres (soit sur une trentaine de nanomètres pour 15 canaux). Chaque réseau de diffraction est capable d'extraire cinq longueurs d'onde de l'ensemble. Par exemple, pour la deuxième zone locale, le réseau extrait les longueurs d'onde à 1558, 1560, 1562, 1564 et 1566 nm.

L'article de M.I. IRSHID et al. intitulé "A Fully Transparent Fiber-Optic Ring Architecture for WDM Networks", publié dans Journal of Lightwave Technology, vol. 10, n°1, janvier 1992, pp. 101-108 décrit encore un système de ce genre, mais avec un filtre acousto-optique comme moyen d'extraction et d'insertion.

Bien que donnant satisfaction à certains égards, ces boucles présentent un double inconvénient. D'une part, elles nécessitent une multitude de sources lumineuses, aussi bien dans la tête de réseau que dans chaque zone locale. D'autre part, elles imposent des contraintes sévères sur le choix des longueurs d'onde. Il faut, en effet, que chaque longueur d'onde soit précise à 0,3 nm environ, et que l'écart entre les longueurs d'onde soit de 2 nm. Il en résulte une étendue considérable occupée par le spectre global (30 nm pour 15 canaux comme expliqué plus haut).

Le document EP-A-0 295 857 décrit un système à multiplexage optique comprenant un laser à semiconducteur commandé par intervalles successifs. Une telle technique ne peut convenir que pour les taux de transmission faible. Par ailleurs, cette technique nécessite deux opérations distinctes, l'une de multiplexage, l'autre de commande en longueur d'onde. Enfin, elle ne concerne pas une boucle de transmission.

La présente invention a justement pour but de remédier à ces inconvénients.

### Exposé de l'invention

Selon l'invention, la tête de réseau comprend un seul laser à semiconducteur mais qui est accordable en longueur d'onde. Ce laser est commandé en longueur d'onde pour attribuer à divers groupes de données une longueur d'onde particulière. Pour chaque groupe, le faisceau lumineux (émis à la longueur d'onde particulière) est modulé par les données du groupe. On obtient donc, en sortie du laser, une séquence multicolore de groupes de données.

Chaque zone locale se voit alors attribuer une longueur d'onde particulière. Le multiplexeur de chaque zone locale comprend des moyens pour extraire de la séquence multicolore qu'il reçoit, le groupe qui possède la longueur d'onde propre à sa zone. Les données destinées à cette zone lui sont donc délivrées.

Le multiplexeur de chaque zone locale comprend, par ailleurs, un seul laser à semiconducteur, accordable en longueur d'onde, pour insérer, dans la zone locale, en remplacement du groupe qui a été extrait.

La longueur d'onde utilisée pour les données insérées peut être soit la longueur d'onde propre à la zone locale, soit une longueur d'onde différente, mais qui est la même pour toutes les stations.

La boucle se referme sur la tête de réseau par des moyens aptes à récupérer les données contenues dans la séquence multicolore venant à la tête et pour transférer ces données sur le réseau général.

Les lasers qui conviennent bien à l'invention sont les lasers à semiconducteur de type DFB ou DBR multiélectrodes. De tels lasers sont connus et décrits, par exemple, dans l'article de M.J. CHAWKI et al. intitulé "M3NET Demonstration of HD WDM Optical Network Using Two Electrode DFB Laser Filtre as Tunable Narrow-band FM Receiver", publié dans "Electronics Letters", vol. 28, n° 2, 1992, pp. 147-148.

L'article de M.J. CHAWKI et al. intitulé "Demonstration of a High Speed Optical Drop Function Using a Tunable DFB Laser", publié dans Electronics Letters, 21 janvier 1993, vol. 29, n° 2, pp. 193-195, décrit, par ailleurs, l'extraction d'un octet parmi deux sur une ligne de transmission à 1,7 Gbit/s.

Ces lasers accordables ont deux avantages principaux : la rapidité de commutation ainsi qu'un domaine d'accord continu de la longueur d'onde d'émission. Le meilleur résultat obtenu par les inventeurs portait sur un laser à contre-réaction répartie d'une longueur de 200 µm et à deux électrodes. La plage d'accord à 1,5 µm était de 200 GHz (soit environ 1,5 nm) ; ; la largeur de raie était de 25 MHz maximum. Un temps de commutation de 550 ps a été mesuré dans une expérimentation de commutation de mode.

Ces performances du laser DFB biélectrode sont décrites dans l'article de M.J. CHAWKI et al., intitulé "2 Gbit/s Direct Detection Transmission Using Optical Mode Switching in a Two-electrode DFB Laser, publié dans "Journal of Optical Communications", 1992, pp. 82-84.

Un autre avantage des sources accordables est de permettre un multiplexage dense avec une distance entre canaux qui est typiquement de 0,3 à 0,5 nm. Le domaine spectral utilisé est alors inférieur à 2 nm pour 4 canaux alors qu'il était de plus de 8 nm dans l'art antérieur.

De façon plus précise, la présente invention a donc pour objet une boucle de transmission à multiplexage dans le temps et en longueur d'onde, comprenant une tête de réseau reliée à un réseau général de transmission, plusieurs multiplexeurs optiques à insertion et extraction de données disposés dans autant de zones locales à desservir, au moins une fibre optique reliant en boucle la tête de réseau et les multiplexeurs, cette boucle étant caractérisée par le fait que :
A) la tête de réseau comprend :
   a) des moyens d'émission comprenant :
      - des moyens pour extraire du réseau général des données destinées aux différentes zones locales et des moyens pour organiser ces données en groupes multiplexés dans le temps, chaque groupe étant destiné à une zone locale particulière,
      - un laser à semiconducteur accordable en longueur d'onde,
      - des moyens pour commander l'émission du laser à une longueur d'onde particulière attachée à une zone locale et pour moduler cette émission par les données d'un groupe destinées à ladite station, le laser émettant ainsi une séquence multicolore de faisceaux modulés par les groupes de données,
   b) des moyens de réception comprenant :
      - des moyens pour détecter les données présentes dans la séquence multicolore retournant à la tête de réseau,
      - des moyens pour insérer ces données dans le réseau général,
B) chaque zone locale comprend :
   - des moyens d'extraction aptes à extraire de la séquence multicolore parvenant à la zone locale le faisceau ayant la longueur d'onde propre à la zone locale,
   - des moyens d'insertion aptes à insérer dans la séquence multicolore quittant la zone locale, un groupe de données en remplacement du groupe de données extrait, ces moyens comprenant une source laser à semiconducteur accordable en longueur d'onde et accordé à une longueur d'onde particulière, ce laser recevant des groupes de données à insérer et émettant un faisceau à ladite longueur d'onde et modulé par les données à insérer.

Dans la tête de réseau, les moyens de commande du laser à semiconducteur peuvent être aptes, en outre, à commander l'émission de signaux de synchronisation accompagnant les données, chaque signal de synchronisation destiné à une zone locale étant émis à la longueur d'onde propre à cette zone. L'ensemble des signaux de synchronisation destinés à toutes les zones locales de la boucle peuvent former un octet.

Dans un mode de réalisation préféré, les groupes de données sont eux aussi des octets.

### Brève description des dessins

- la figure 1, déjà décrite, représente le schéma d'un réseau de transmission à boucles avec équipements électroniques ;
- la figure 2, déjà décrite, montre la structure d'une boucle ;
- la figure 3, déjà décrite, illustre une boucle passive en technologie optique ;
- la figure 4 montre l'architecture d'une boucle passive avec sources accordables et double multiplexage dans le temps et en longueur d'onde, selon l'invention ;
- la figure 5 illustre une variante à une seule longueur d'onde d'insertion.

### Exposé détaillé de modes de réalisation

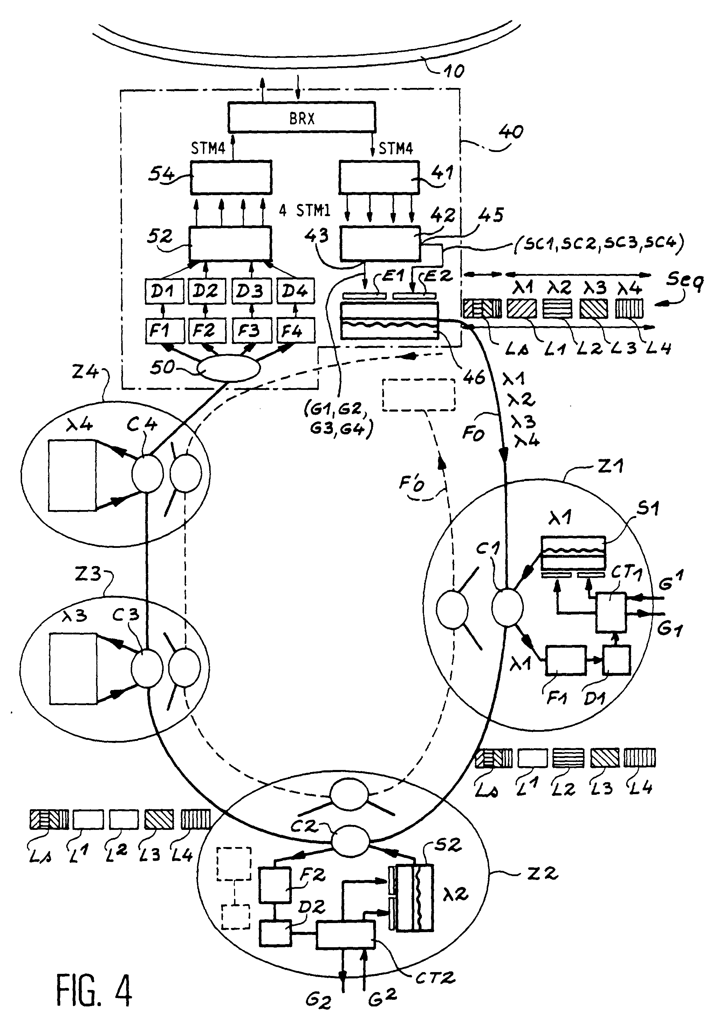

On voit, sur la figure 4, une boucle conforme à l'invention, avec une tête de réseau 40, quatre zones locales Z1, Z2, Z3, Z4 et une fibre optique monomode F0 (une fibre optique de secours F0' est représentée en tirets mais les moyens qui lui sont associés ne sont pas représentés explicitement).

La tête de réseau 40 comprend un brasseur BRX connecté au réseau général 10, ce brasseur délivrant des signaux électriques organisés par exemple selon la trame dite STM 4 (l'abréviation STM signifiant "Synchronous Transport Module"). Le débit peut être de 622 080 kbits/s. Un démultiplexeur 41 divise ce flux de données en quatre trames STM 1 de 155 520 bits/s chacune.

Un multiplexeur 42 organise ces données en groupes multiplexés dans le temps, en l'espèce en 4 groupes G1, G2, G3, G4 destinés respectivement aux quatre zones Z1, Z2, Z3, Z4. Chacun de ces groupes peut être un octet. Ces groupes apparaissent sur la sortie 43 du multiplexeur 42.

Ce multiplexeur produit également, sur une seconde sortie 45, quatre signaux de commande SC1, SC2, SC3, SC4 en synchronisme avec les groupes de données.

L'étage émetteur de la tête de réseau 40 comprend encore un laser à semiconducteur biélectrode 46, dont une électrode E1 reçoit les groupes de données G1, G2, G3, G4 et l'autre électrode E2 les signaux de commande SC1, SC2, SC3, SC4. Ces derniers commandent la longueur d'onde d'émission du laser et les premiers modulent l'émission du laser (en amplitude ou en fréquence). A la sortie du laser 46, on trouve donc un faisceau lumineux multicolore en ce sens qu'il comprend une séquence de signaux à des longueurs différentes **λ1,λ2,λ3,λ4,** chaque signal véhiculant, par sa modulation, les données des groupes G1, G2, G3, G4. Cette séquence multicolore est référencée Seq et comprend des groupes L1, L2, L3, L4 aux longueurs d'onde **λ1,λ2,λ3,λ4.**

A ce stade, le multiplexage est donc double : à la fois en temps (les données se suivent) et en longueur d'onde (les longueurs d'onde se suivent). En d'autres termes, chaque groupe de données est associé à une position temporelle et à une position spectrale.

De préférence, le circuit 42 produit également un signal de synchronisation, formé par exemple par deux bits 1 et 0 pour chaque groupe de données. Ce signal est converti à la longueur d'onde correspondant au groupe. La séquence de données est alors précédée d'un groupe de synchronisation Ls formé par quatre longueurs d'onde **λ1,λ2,λ3,λ4,** chacune modulée par 1 et 0. L'ensemble du signal de synchronisation Ls et des quatre groupes de données L1, L2, L3, L4 forme la séquence Seq.

De préférence encore, chaque groupe de données est séparé du suivant par un bit, par exemple 0. Cette solution est indispensable pour une transmission à haut débit par exemple STM 16.

Cette séquence ainsi organisée se propage dans la fibre optique monomode F0 et dessert les quatre stations locales Z1, Z2, Z3, Z4.

Dans une station locale, par exemple la première Z1, se trouve un composant optique passif C1, du genre coupleur, qui prélève la partie de la séquence multicolore incidente qui est à la longueur d'onde **λ1,** c'est-à-dire à la fois le signal de synchronisation et les données. On trouve ensuite un filtre optique F1, centré sur cette longueur d'onde, et un photodétecteur D1. Un circuit de traitement CT1 est relié au détecteur et délivre le groupe de données G1 organisé sous forme de trame STM 1.

Le circuit de traitement CT1 reçoit, par ailleurs, des données ***G***^{**1**} provenant de la zone locale Z1 et les adresse à une source laser accordable S1. Le signal de synchronisation à la longueur d'onde **λ1,** qui avait été prélevé par le coupleur C1, sert à former un signal de commande de la source S1 à la longueur d'onde **λ1.** Le signal lumineux engendré par la source S1 est dirigé dans le composant C1, de sorte que le groupe de données ***G***^{**1**} va se trouver automatiquement inséré à l'emplacement libéré par l'extraction.

La séquence multicolore quittant la zone locale Z1 comprend dès alors, après le groupe de synchronisation Ls, un groupe ***L***^{**1**} (l'indice haut indiquant un groupe inséré) plus les groupes L2, L3, L4 d'origine.

Le même processus se reproduit dans chaque station. Par exemple, la zone locale Z2 extrait le groupe L2 et réinsère le groupe ***L***^{**2**}.

La tête de réseau 40 comprend, par ailleurs, à l'autre extrémité de la boucle, des moyens de réception constitués par un coupleur optique 50, quatre filtres F1, F2, F3, F4 centrés respectivement sur les longueurs d'onde **λ1,λ2,λ3,λ4,** quatre photodétecteurs D1, D2, D3, D4, un démultiplexeur 52 qui organise les données délivrées par les photodétecteurs en quatre trames STM 1, un multiplexeur 54 qui reconstitue une trame STM 4 et enfin le brasseur BRX qui réinsère dans le réseau général 10 les données de la boucle.

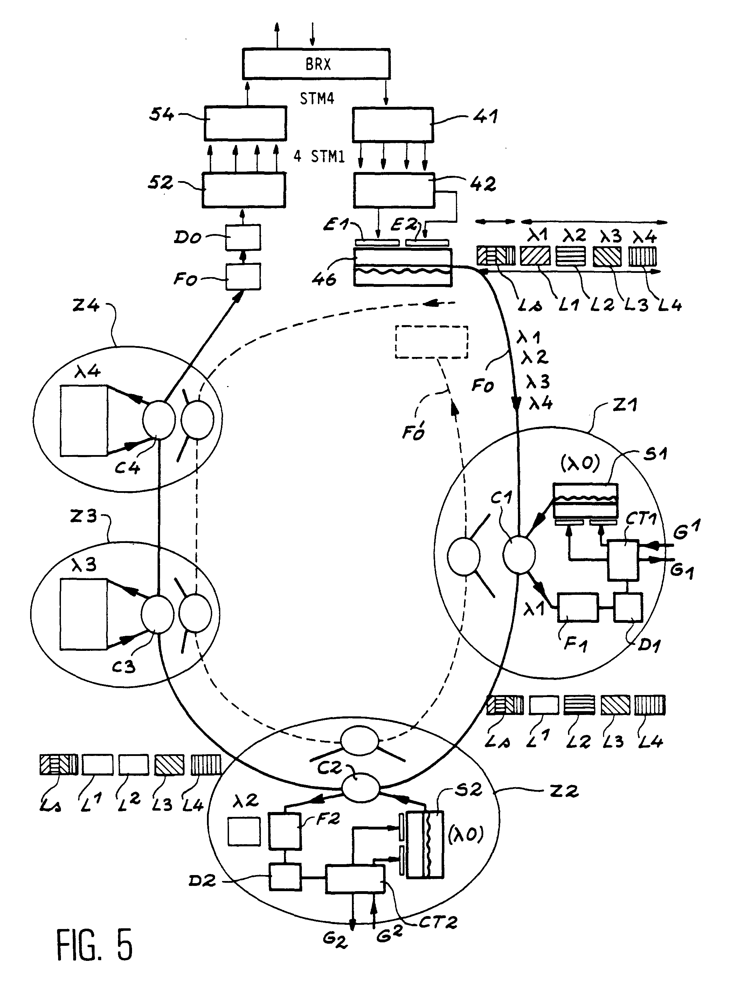

Dans la variante de la figure 5, les sources laser S1, S2, S3, S4 disposées dans chaque zone locale n'émettent pas à la longueur d'onde propre à la zone, c'est-à-dire à **λ1,λ2,λ3,λ4,** mais à une longueur d'onde unique **λ0,** qui est la même pour toutes les zones.

La tête de réseau s'en trouve simplifiée, côté réception, un seul filtre F0 centré sur **λ0** et un seul photodétecteur D0 suffisent. On retrouve ensuite le démultiplexeur 52 et le multiplexeur 54.

L'invention couvre également le cas d'une boucle qui desservirait trois zones locales avec un affluent STM 4 ; il y a alors un signal STM 1 supplémentaire qui peut être affecté à la zone locale qui en a besoin. Dans ce cas, la fonction d'insertion fonctionne comme précédemment, mais la fonction extraction verra arriver deux octets dans une seule séquence qui seront différenciés et traités sur deux voies en parallèle pour reconstituer deux signaux STM 1.

Une autre solution de synchronisation peut consister à démarrer la séquence de données par quelques éléments binaires émis sous une autre longueur d'onde **λ5.** Cela implique la détection de cette longueur d'onde par toutes les zones locales de la boucle.

Quelques considérations vont maintenant être développées sur les bilans de liaison entre la tête de réseau et les différentes zones locales, selon que ces zones sont au nombre de trois ou de quatre.

La lettre ℓ représente la longueur d'un arc de la boucle entre deux zones locales ou entre la tête et la première ou la dernière zone, et la lettre α l'affaiblissement linéique (**α=0,25 *dB*/*km***). La quantité αℓ représente l'affaiblissement de la fibre optique entre deux zones locales.

Le tableau suivant présente le bilan de liaison pour chaque longueur d'onde **λ1,λ2,λ3,** d'une boucle à 3 zones locales. La voie extraction correspond à la partie de la boucle située entre la tête de réseau et la station considérée, par exemple la zone locale Z1 pour **λ1.** La voie insertion correspond à la partie de la boucle située entre la zone locale Z1 pour **λ1** (Z2 pour **λ2,** ...) et la réception en fin de boucle.

Les coupleurs sont supposés symétriques.

Pour trois stations travaillant à **λ1,λ2,λ3,** les atténuations sont respectivement :

| | λ1 | λ2 | λ3 |
|---|---|---|---|
| voie extraction | αℓ + 10 dB | 2 αℓ + 15,5 dB | 3 αℓ + 21 dB |
| voie insertion | 3 αℓ + 26,5 dB | 2 αℓ + 21dB | αℓ + 15,5 dB |

L'atténuation la plus élevée est égale à 26,5 dB + 3αℓ. Avec un seuil de détection de -34 dBm à 620 Mbits/s, on obtient une longueur de boucle de 13 km si l'on émet à -5 dBm et de 40 km si l'on émet à 0 dBm.

Pour quatre stations, les bilans sont :

| | | | | |
|---|---|---|---|---|
| Atténuation au récepteur | λ1 | λ2 | λ3 | λ4 |
| voie extraction | αℓ + 10 dB | 2 αℓ + 15,5 dB | 3 αℓ + 21 dB | 4 αℓ + 26,5 dB |
| voie insertion | 4 αℓ + 33,5 dB | 3 αℓ + 28 dB | 2 αℓ + 22,5 dB | αℓ + 17dB |

L'atténuation maximum est de 33,5 dB + 4αℓ. La taille de la boucle est de 2,5 km pour une émission de 0 dBm et de 42,5 km pour une émission à 10 dBm.

L'implantation correspondant à des coupleurs dissymétriques (10/90) peut être envisagée pour optimiser les pertes dans la boucle.

Le tableau suivant correspond à 3 stations et au cas de la figure 5 où une seule longueur d'onde λ0 est utilisée pour l'insertion.

| | λ1 | λ2 | λ3 |
|---|---|---|---|
| voie extraction | αℓ + 10 dB | 2 αℓ + 15,5 dB | 3 αℓ + 21 dB |
| voie insertion | 3 αℓ + 21 dB | 2 αℓ + 15,5 dB | αℓ + 10 dB |

L'atténuation la plus élevée est de 21 dB + 3 αℓ ; la dimension de la boucle est (seuil de détection -34 dBm à 620 Mbit/s) respectivement de 42,6 km pour une émission à -5 dBm et 69 km pour une émission à 0 dBm.

Le tableau suivant correspond à quatre stations et toujours au cas d'une seule longueur d'onde de réémission.

| | λ1 | λ2 | λ3 | λ4 |
|---|---|---|---|---|
| voie extraction | αℓ + 10 dB | 2 αℓ + 15,5 dB | 3 αℓ + 21 dB | 4 αℓ + 26,5 dB |
| voie insertion | 4 αℓ + 26,5 dB | 3 αℓ + 21 dB | 2 αℓ + 15,5 dB | αℓ + 10 dB |

L'atténuation maximum est de 26,5 dB + 4αℓ ; ce qui entraîne une taille de boucle de 12,5 km pour une émission à -5 dBm, 37,5 km pour une émission à 0 dBm et 77,5 km pour une émission à +10 dBm.

L'utilisation de coupleurs dissymétriques (10/90) permet d'optimiser les pertes dans la boucle.

Une fonction supplémentaire peut être mise en oeuvre dans cette configuration, à savoir l'échange d'informations entre une zone locale i et une zone locale j pendant les périodes de repos communes aux deux zones. En effet, en dehors de la période active ti, la source de la zone i est au repos ; en dehors de la période tj, le circuit de réception de la zone j est au repos (sauf surdébit comme envisagé précédemment). La source de la zone i peut alors émettre pendant une période différente de ti et tj un octet (donc un flux STM 1) vers la zone j ; elle doit s'assurer qu'il n'y a pas de surdébit et signaler à la tête de réseau que cette période est occupée par la zone j en réception.

Il va de soi que l'invention n'est pas limitée au cas où la tête de réseau est constituée par une entité unique. L'invention couvre le cas d'une boucle où la tête de réseau serait assurée par deux entités distantes, une entité émission et une entité réception. Les zones locales sont réparties tout au long de la fibre optique entre ces deux entités. La boucle est en quelque sorte ouverte.

## Revendications

1. Boucle de transmission à multiplexage dans le temps et en longueur d'onde, comprenant une tête de réseau (40) reliée à un réseau général de transmission (10), plusieurs multiplexeurs optiques à insertion et extraction de données (MIE) disposés dans autant de zones locales à desservir (Z1, Z2, ...), au moins une fibre optique (F0, F0') reliant en boucle la tête de réseau (40) et les multiplexeurs (MIE), cette boucle étant **caractérisée par le fait que** :
A) la tête de réseau (40) comprend :
a) des moyens d'émission comprenant :
- des moyens (BRX) pour extraire du réseau général (10) des données destinées aux différentes zones locales et des moyens (41, 42) pour organiser ces données en groupes (G1, G2, G3, G4) multiplexés dans le temps , chaque groupe étant destiné à une zone locale particulière (Z1, Z2, Z3, Z4),
- un laser à semiconducteur accordable en longueur d'onde (46),
- des moyens (42) pour commander l'émission du laser 46) à une longueur d'onde particulière (**λ1,λ2,λ3,λ4**) attachée à une zone locale (Z1, Z2, Z3, Z4) et pour moduler cette émission par les données d'un groupe (G1, G2, G3, G4) destinées à ladite station (Z1, Z2, Z3, Z4), le laser (46) émettant ainsi une séquence multicolore (L1, L2, L3, L4) de faisceaux modulés par les groupes de données,
b) des moyens de réception comprenant :
- des moyens (D1, D2, ...) pour détecter les données présentes dans la séquence multicolore retournant à la tête de réseau (40),
- des moyens (BRX) pour insérer ces données dans le réseau général,
B) chaque zone locale (Z1, Z2, Z3, Z4) comprend :
- des moyens d'extraction (C1, F1, D1) (C2, F2, D2) aptes à extraire de la séquence multicolore parvenant à la zone locale le faisceau ayant la longueur d'onde (**λ1,λ2,λ3,λ4**) propre à la zone locale (Z1, Z2, Z3, Z4),
- des moyens d'insertion aptes à insérer dans la séquence multicolore quittant la zone locale (Z1, Z2, Z3, Z4), un groupe de données en remplacement du groupe de données extrait, ces moyens comprenant une source laser à semiconducteur accordable (S1, S2, S3, S4) en longueur d'onde et accordé à une longueur d'onde particulière, ce laser recevant des groupes de données à insérer et émettant un faisceau à ladite longueur d'onde et modulé par les données à insérer.

2. Boucle selon la revendication 1, **caractérisée par le fait que**, dans la tête de réseau (40), les moyens (42) de commande du laser à semiconducteur (46) sont aptes, en outre, à commander l'émission de signaux de synchronisation accompagnant les données, chaque signal de synchronisation destiné à une zone locale (Z1, Z2, Z3, Z4) étant émis à la longueur d'onde (**λ1,λ2,λ3,λ4**) propre à cette zone.

3. Boucle selon la revendication 2, **caractérisée par le fait que** chaque signal de synchronisation est constitué par au moins 2 bits.

4. Boucle selon la revendication 3, **caractérisée par le fait que** l'ensemble des signaux de synchronisation (Ls) destinés à toutes les zones locales de la boucle forme un octet.

5. Boucle selon la revendication 1, **caractérisée par le fait que** les groupes de données (G1, G2, G3, G4) peuvent être séparés les uns des autres par au moins un élément binaire.

6. Boucle selon l'une quelconque des revendications 1 à 5, **caractérisée par le fait que** les groupes de données (G1, G2, G3, G4) sont des octets.

7. Boucle selon la revendication 1, **caractérisée par le fait que**, dans chaque station locale (Z1, Z2, Z3, Z4), le laser à semiconducteur accordable (S1, S2, S3, S4) destiné à insérer un groupe de données (***G***^{**1**}**,*G***^{**2**}**,** ...) à la place du groupe extrait (G1, G2, ...) est accordé à la longueur d'onde (**λ1,λ2,λ3,λ4**) propre à la station locale (Z1, Z2, Z3, Z4).

8. Boucle selon la revendication 7, **caractérisée par le fait que** la tête de réseau comprend, dans ses moyens de réception, autant de filtres optiques (F1, F2, F3, F4) qu'il y a de stations locales (Z1, Z2, Z3, Z4) et autant de détecteurs (D1, D2, D3, D4) reliés aux filtres.

9. Boucle selon la revendication 1, **caractérisée par le fait que**, dans chaque station locale, le laser à semiconducteur accordable (S1, S2, S3, S4) destiné à insérer un groupe de données (***G***^{**1**}**,*G***^{**2**}, ...) à la place du groupe extrait (G1, G2, ...) est accordé à une longueur d'onde (λ**0**) qui est unique pour toutes les stations locales (Z1, Z2, Z3, Z4) mais qui est différente des longueurs d'onde (**λ1,λ2,λ3,λ4**) propres aux stations locales.

10. Boucle selon la revendication 9, **caractérisée par le fait que** la tête de réseau (40) comprend, dans ses moyens de réception, un seul filtre optique (F0) centré sur la longueur d'onde unique (λ**0**) et un seul détecteur (D0) relié à ce filtre.

11. Boucle selon l'une quelconque des revendications 1 à 10, **caractérisée par le fait que** le laser accordable (46) de la tête de réseau (40) et les lasers (S1, S2, S3, S4) des zones locales (Z1,Z2, Z3, Z4) sont des lasers à semiconducteur multiélectrodes.

12. Boucle selon les revendications 1 à 11, **caractérisé par le fait que** la tête de réseau est assurée par deux entités distantes, une entité émission et une autre réception, les zones locales étant réparties tout au long de la fibre optique, entre ces deux entités.

## Patentansprüche

1. Übertragungsschleife mit Zeit- und Wellenlängen-Multiplexbetrieb, umfassend einen mit einem allgemeinen Übertragungsnetz (10) verbundenen Netzkopf (40), mehrere optische Multiplexer zur Dateneinfügung und Datenextraktion (MIE), die in ebenso vielen abzuarbeitenden lokalen Zonen (Z1, Z2, ...) angeordnet sind, mindestens eine optische Faser (F0, F0'), welche den Netzkopf (40) und die Multiplexer (MIE) in einer Schleife verbindet, wobei diese Schleife **dadurch gekennzeichnet ist, dass**:
A) der Netzkopf (40) umfasst:
a) Sendemittel mit:
Mitteln (BRX) zum Extrahieren von für die verschiedenen lokalen Zonen bestimmten Daten aus dem allgemeinen Netz (10), sowie Mitteln (41, 42) zum Organisieren dieser Daten in zeitlich gemultiplexte Gruppen (G1, G2, G3, G4), wobei jede Gruppe für eine spezielle lokalen Zone (Z1, Z2, Z3, Z4) bestimmt ist,
einem Halbleiterlaser (46), der in der Wellenlänge abstimmbar ist,
Mitteln (42) zum Steuern der Emission des Lasers (46) auf einer bestimmten Wellenlänge (λ1, λ2, λ3, λ4), die einer lokalen Zone (Z1, Z2, Z3, Z4) zugeordnet ist, und zum Modulieren dieser Emission durch die Daten einer Gruppe (G1, G2, G3, G4), die jeweils für die Station (Z1, Z2, Z3, Z4) bestimmt sind, wobei der Laser (46) so eine vielfarbige Sequenz (L1, L2, L3, L4) von durch die Datengruppen modulierten Strahlen emittiert,
b) Empfangsmittel mit:
Mitteln (D1, D2, ...) zum Erfassen der in der zum Netzkopf (40) zurückkehrenden vielfarbigen Sequenz vorhandenen Daten,
Mittel (BRX) zum Einfügen dieser Daten in das allgemeine Netz,
B) jede lokale Zone (Z1, Z2, Z3, Z4) umfasst:
Extraktionsmittel (C1, F1, D1) (C2, F2, D2), die aus der an der lokalen Zone ankommenden vielfarbigen Sequenz den Strahl mit der der lokalen Zone (Z1 Z2, Z3, Z4) eigenen Wellenlänge (λ1, λ2, λ3, λ4) extrahieren können,
Einfügungsmittel, die in die vielfarbige Sequenz, welche die lokale Zone (Z1, Z2, Z3, Z4) verlässt, eine Datengruppe als Ersatz der extrahierten Datengruppe einfügen können, wobei diese Mittel eine in der Wellenlänge abstimmbare, auf eine bestimmte Wellenlänge eingestellte Halbleiter-Laserquelle (S1, S2, S3, S4) umfassen, wobei dieser Laser einzufügende Datengruppen empfängt und einen Strahl mit der genannten Wellenlänge, der von den einzufügenden Daten moduliert ist, emittiert.

2. Schleife nach Anspruch 1, **dadurch gekennzeichnet, dass** in dem Netzkopf (40) die Mittel (42) zur Steuerung des Halbleiterlasers (46) außerdem das Senden von die Daten begleitenden Synchronisationssignalen steuern können, wobei jedes für eine lokale Zone (Z1, Z2, Z3, Z4) bestimmte Synchronisationssignal mit der dieser Zone eigenen Wellenlänge ((λ1, λ2, λ3, λ4) gesendet wird.

3. Schleife nach Anspruch 2, **dadurch gekennzeichnet, dass** jedes Synchronisationssignal aus mindestens zwei Bits besteht.

4. Schleife nach Anspruch 3, **dadurch gekennzeichnet, dass** die Gesamtheit der für alle lokalen Zonen der Schleife bestimmten Synchronisationssignale (Ls) ein Oktett bildet.

5. Schleife nach Anspruch 1, **dadurch gekennzeichnet, dass** die Datengruppen (G1, G2, G3, G4) durch mindestens ein binäres Element voneinander getrennt werden können.

6. Schleife nach einem der Ansprüche 1 bis 5, **dadurch gekennzeichnet, dass** die Datengruppen (G1, G2, G3, G4) Oktette sind.

7. Schleife nach Anspruch 1, **dadurch gekennzeichnet, dass** in jeder lokalen Station (Z1, Z2, Z3, Z4) der abstimmbare Halbleiterlaser (S1 S2, S3, S4), der zur Einfügung einer Datengruppe (G¹, G², ...) anstelle der extrahierten Gruppe (G1, G2, ...) bestimmt ist, auf die der lokalen Station (Z1, Z2, Z3, Z4) eigene Wellenlänge (λ1, λ2, λ3, λ4) eingestellt ist.

8. Schleife nach Anspruch 7, **dadurch gekennzeichnet, dass** der Netzkopf in seinen Empfangsmitteln so viele optische Filter (F1, F2, F3, F4) wie es lokale Stationen (Z1, Z2, Z3, Z4) gibt, und ebenso viele mit den Filtern verbundene Detektoren (D1, D2, D3, D4) aufweist.

9. Schleife nach Anspruch 1, **dadurch gekennzeichnet, dass** in jeder lokalen Station der abstimmbare Halbleiterlaser (S1, S2, S3, S4), der zum Einfügen einer Datengruppe (G¹, G², ...) anstelle der extrahierten Gruppe (G1, G2, ...) bestimmt ist, auf eine Wellenlänge (λ0) eingestellt ist, die eine einzige für alle lokalen Stationen (Z1, Z2, Z3, Z4) ist, sich aber von den den lokalen Stationen eigenen Wellenlängen (λ1, λ2, λ3, λ4) unterscheidet.

10. Schleife nach Anspruch 9, **dadurch gekennzeichnet, dass** der Netzkopf (40) in seinen Empfangsmitteln ein einziges auf die einzige Wellenlänge (λ0) zentriertes optisches Filter (F0) und einen einzigen mit diesem Filter verbundenen Detektor (D0) aufweist.

11. Schleife nach einem der Ansprüche 1 bis 10, **dadurch gekennzeichnet, dass** der abstimmbare Laser (46) des Netzkopfes (40) und die Laser (S1, S2, S3, S4) der lokalen Zonen (Z1, Z2, Z3, Z4) Mehrfachelektroden-Halbleiterlaser sind.

12. Schleife nach den Ansprüchen 1 bis 11, **dadurch gekennzeichnet, dass** der Netzkopf von zwei voneinander entfernten Einheiten, und zwar einer Sendeeinheit und einer Empfangseinheit, gestellt wird, wobei die lokalen Zonen entlang der optischen Faser zwischen diesen beiden Einheiten verteilt sind.

## Claims

1. A time division and wavelength division multiplexing transmission ring comprising a network head (40) connected to a general transmission network (10), a plurality of optical data insertion and extraction multiplexers (MIE) disposed in as many local zones (Z1, Z2, ...) to be served, at least one optical fibre (F0, F0') connecting the network head (40) and the multiplexers (MIE) in a ring, said ring being **characterised in that**:
A) the network head (40) comprises:
a) emission means comprising:
- means (BRX) for extracting from the general network (10) data intended for the different local zones and means (41, 42) for organising said data in time division-multiplexed groups (G1, G2, G3, G4), each group being intended for a particular local zone (Z1, Z2, Z3, Z4),
- a wavelength-tuneable semiconductor laser (46), and
- means (42) for controlling the emission of the laser (46) at a particular wavelength (λ1, λ2, λ3, λ4) attached to a local zone (Z1, Z2. Z3. Z4) and for modulating said emission by the data of a group (G1, G2, G3, G4) which are intended for said station (Z1, Z2. Z3. Z4), the laser (46) thus emitting a multicolour sequence (L1, L2, L3, L4) of beams modulated by the groups of data, and
b) receiving means comprising:
- means (D1, D2, ...) for detecting the data present in the multicolour sequence returning to the network head (40), and
- means (BRX) for inserting said data in the general network,
B) each local zone (Z1, Z2, Z3, Z4) comprises:
- extraction means (C1, F1, D1), (C2, F2, D2) for extracting from the multicolour sequence arriving at the local zone the beam of the wavelength (λ1, λ2, λ3, λ4) particular to the local zone (Z1, Z2, Z3, Z4), and
- insertion means for inserting in the multicolour sequence leaving the local zone (Z1, Z2, Z3, Z4) a group of data replacing the extracted group of data, said means comprising a wavelength-tuneable semiconductor laser source (S1, S3, S3, S4) tuned to a particular wavelength, said laser receiving groups of data to be inserted and emitting a beam at said wavelength and modulated by the data to be inserted.

2. A ring according to claim 1 **characterised in that**, in the network head (40), the means (42) for controlling the semiconductor laser (46) are also capable of controlling the emission of synchronisation signals accompanying the data, each synchronisation signal intended for a local zone (Z1, Z2, Z3, Z4) being emitted at the wavelength (λ1, λ2, λ3, λ4) particular to that zone.

3. A ring according to claim 2 **characterised in that** each synchronisation signal is formed by at least two bits.

4. A ring according to claim 3 **characterised in that** the assembly of synchronisation signals (Ls) which are intended for all the local zones of the ring forms an octet.

5. A ring according to claim 1 **characterised in that** the groups of data (G1, G2, G3, G4) can be separated from each other by at least one binary element.

6. A ring according to any one of claims 1 to 5 **characterised in that** the groups of data (G1, G2, G3, G4) are octets.

7. A ring according to claim 1 **characterised in that**, in each local station (Z1, Z2, Z3, Z4), the tuneable semiconductor laser (S1, S2, S3, S4) intended to insert a group of data (G¹, G², ..) in place of the extracted group (G1, G2,...) is tuned to the wavelength (λ1, λ2, λ3, λ4) particular to the local station (Z1, Z2, Z3, Z4).

8. A ring according to claim 7 **characterised in that** the network head comprises in its receiving means as many optical filters (F1, F2, F3, F4) as there are local stations (Z1, Z2, Z3, Z4) and as many detectors (D1, D2, D3, D4) connected to the filters.

9. A ring according to claim 1 **characterised in that** in each local station the tuneable semiconductor laser (S1, S2, S3, S4) intended to insert a group of data (G¹, G²,...) in place of the extracted group (G1, G2, ..) is tuned to a wavelength (λ0) which is unique for all the local stations (Z1, Z2, Z3, Z4) but which is different from the wavelengths (λ1, λ2, λ3, λ4) particular to the local stations.

10. A ring according to claim 9 **characterised in that** the network head (40) comprises in its receiving means a single optical filter (F0) centred on the unique wavelength (λ0) and a single detector (D0) connected to said filter.

11. A ring according to any one of claims 1 to 10 **characterised in that** the tuneable laser (46) of the network head (40) and the lasers (S1, S2, S3, S4) of the local zones (Z1, Z2, Z3, Z4) are multi-electrode semiconductor lasers.

12. A ring according to claims 1 to 11 **characterised in that** the network head is implemented by two spaced entities, an emission entity and another reception entity, the local zones being distributed all along the optical fibre between said two entities.
